(19) Europäisches Patentamt
European Patent Office
Office européen des brevets

(11) EP 2 224 756 B1

(12) **EUROPEAN PATENT SPECIFICATION**

(45) Date of publication and mention
of the grant of the patent:
**04.09.2013 Bulletin 2013/36**

(51) Int Cl.:
*H04W 4/00* (2009.01)    *H04W 74/08* (2009.01)
*H04W 74/00* (2009.01)    *H04W 72/04* (2009.01)
*H04L 12/911* (2013.01)

(21) Application number: **08859507.9**

(22) Date of filing: **21.11.2008**

(86) International application number:
**PCT/JP2008/071245**

(87) International publication number:
**WO 2009/075179 (18.06.2009 Gazette 2009/25)**

(54) **Wireless communication system, slave station, and master station**

Drahtloses Kommunikationssystem, Slave-Station und Master-Station

Système de communication sans fil, station asservie et station maîtresse

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **10.12.2007 JP 2007318990**

(43) Date of publication of application:
**01.09.2010 Bulletin 2010/35**

(73) Proprietor: **NTT DOCOMO, INC.**
**Chiyoda-ku**
**Tokyo 100-6150 (JP)**

(72) Inventors:
• **YAMADA, Takefumi**
**c/o NTT DoCoMo, Inc.,**
**Tokyo 100-6150 (JP)**
• **COSOVIC, Ivan**
**c/o NTT DoCoMo, Inc.,**
**Tokyo 100-6150 (JP)**

(74) Representative: **HOFFMANN EITLE**
**Patent- und Rechtsanwälte**
**Arabellastrasse 4**
**81925 München (DE)**

(56) References cited:
**WO-A1-2008/096705    WO-A1-2008/096707**
**JP-A- 10 322 760    JP-A- 2007 159 131**
**JP-T- 2007 510 365**

• **JUN ZHAO ET AL: "Distributed coordination in dynamic spectrum allocation networks", 2005 1ST IEEE INTERNATIONAL SYMPOSIUM ON NEW FRONTIERS IN DYNAMIC SPECTRUM ACCESS NETWORKS, BALTIMORE, MD, USA, 8 November 2005 (2005-11-08), pages 259-268, XP010855123, DOI: 10.1109/DYSPAN. 2005.1542642 ISBN: 978-1-4244-0013-3**

## Description

TECHNICAL FIELD

The present invention relates to a radio communication system, a lower node and an upper node which perform radio communications via plural radio channels.

BACKGROUND ARTS

In recent years, a demand for radio communications has been growing with the development of radio communication technologies. Along with this growth, effective utilization of frequency resources used in radio communications, and flexible assignment of frequencies are needed (for example, Non-patent Document 1).

For a radio communication system, there is proposed a technology for a fair assignment of a frequency band shared by plural communication apparatuses, or the like. An example of such a radio communication system includes a radio LAN system usable in the fields of industry, science, medicine and the like.

A technology with which a communication channel to be used for radio communications is determined on the basis of use probabilities of communication channels (frequencies) is proposed for such a radio communication system (for example, Non-patent Documents 1 and 2).

Specifically, prior to determination of a communication channel, each communication apparatus predicts a traffic amount (hereinafter, predicted traffic demand) needed for a communication performed by the apparatus itself, and thereafter, notifies other communication apparatuses of the predicted traffic demand. Each communication apparatus calculates use probabilities of the communication channels on the basis of the predicted traffic demand of the apparatus itself and the predicted traffic demands of the other communication apparatuses. Subsequently, on the basis of the use probabilities of the communication channels, each communication apparatus determines a communication channel used for communication by the apparatus itself so that gains of the respective communication apparatuses may be equal in amount.

Non-patent Document 1: Y. Xing, R. Chadramouli, S. Mangold, S. Shankar, "Dynamic Spectrum Radio Networks", IEEE, Journal on Selected Areas in Communications (JSAC), Vol. 24, No. 3, pp. 626 to 637, March 2006.
Non-patent Document 2: Zhao J, et al, 2 "Distributed Coordination in Dynamic Spectrum Allocation Networks", 1st IEEE International Symposium on New Frontiers in Dynamic Spectrum Access Networks, pp. 259 to 268, November 2005.

DISCLOSURE OF THE INVENTION

Here, the predicted traffic demand may have an error from a traffic amount (hereinafter, actual traffic demand) actually used for the communication by each communication apparatus. It is expected that the larger a time difference between when the predicted traffic demand is predicted and when the communication is started, the larger the error of the predicted traffic demand from the actual traffic demand.

Since the above described background technology requires that a notification about the predicted traffic demand be made before the start of the communication, the time difference tends to be large between when the predicted traffic demand is predicted and when the communication is started. In other words, the accuracy in calculating the use probabilities of the communication channels is reduced, which in turn makes it difficult to fairly assign the communication channels (frequencies) to the respective communication apparatuses.

In view of the above circumstances, the present invention has been made to address the above problem. An object of the present invention is to provide a radio communication system, a lower node and an upper node as defined by independent claims 1, 9 and 12, respectively, which enable accuracy improvement in calculating use probabilities of communication channels, and a fair assignment of communication channels (frequencies) to respective communication apparatuses.

A radio communication system of a first aspect includes a plurality of lower nodes and an upper node, and performs radio communications between the plurality of lower nodes and the upper node via a plurality of radio channels. The radio communication system includes; a first acquisition unit (future prediction information acquisition unit 104, future prediction unit 106, future prediction information acquisition unit 206, or future prediction unit 221) configured to acquire future prediction information on each of the plurality of lower nodes, the future prediction information indicating a traffic amount predicted, before a start of the radio communications, to be transmitted in the radio communications; a second acquisition unit (latest prediction unit 107, latest prediction information acquisition unit 207, or latest prediction unit 222) configured to acquire latest prediction information on a communication starting station that is a lower node starting the radio communications among the plurality of lower nodes, the latest prediction information indicating a traffic amount predicted, at the start of the radio communications, to be transmitted in the radio communications; a third acquisition unit (measurement unit 102 or measurement unit 202) configured to acquire channel use information on each of the plurality of lower nodes, the channel use information indicating used amounts of radio channels actually used in the radio communications; a calculation unit (calculation unit 108 or calculation unit 208) configured to calculate a radio channel use probability for each of the plurality of radio channels on the basis of both the future prediction information acquired by the first acquisition unit and the channel use information acquired by the third acquisition unit; and a determination unit (determination unit 111 or assignment unit 211) configured to determine one radio channel among the plurality of radio channels on the basis of the radio channel use probabilities calculated by the calculation unit, the one radio channel being to be assigned to the communication starting station. The calculation unit corrects the radio channel use probabilities on the basis of the future prediction information on the communication starting station, and the latest prediction information on the communication starting station.

According to this characteristic, the calculation unit calculates the radio channel use probabilities by using the future prediction information and channel use information which are acquired for each of the lower nodes. Additionally, the calculation unit corrects the radio channel use probabilities on the basis of the future prediction information and latest prediction information on the communication starting station.

More specifically, a fair assignment of the communication channels (frequencies) to the communication apparatuses is enabled by calculating the radio channel use probabilities by using the future prediction information and the channel use information. Additionally, accuracies of calculating the radio channel use probabilities are improvable by correcting the use probabilities of the communication channels on the basis of the future prediction information and latest prediction information on the communication starting station.

In the first aspect, the calculation unit corrects the radio channel use probabilities on the basis of an unused radio channel which is a radio channel not assigned to any one of the plurality of lower nodes, among the plurality of radio channels.

In the first aspect, the calculation unit corrects the radio channel use probabilities on the basis of a lost radio channel which is a radio channel not assignable to any one of the plurality of lower nodes, among the plurality of radio channels.

In the first aspect, the third acquisition unit acquires the channel use information on the basis of a time period for which the radio channels are assigned in the radio communications.

In the first aspect, the third acquisition unit acquires the channel use information on the basis of bandwidths of the radio channels assigned in the radio communications.

In the first aspect, the third acquisition unit acquires the channel use information on the basis of radio distances of signals transmitted via the radio channels assigned in the radio communications.

In the first aspect, each of the plurality of lower nodes includes a prediction unit (future prediction unit 106) configured to predict the future prediction information on the station itself; and the first acquisition unit acquires the future prediction information from each of the plurality of lower nodes.

In the first aspect, the radio communication system includes a monitoring unit (monitoring unit 102 or monitoring unit 202) configured to monitor the radio channels actually used by the plurality of lower nodes in the radio communications, the first acquisition unit acquires the future prediction information on each of the plurality of lower nodes, on the basis of used amounts of the radio channels monitored by the monitoring unit.

A lower node of a second aspect performs radio communications with an upper node via at least any one of a plurality of radio channels. The lower node includes: a first acquisition unit (future prediction information acquisition unit 104 or future prediction unit 106) configured to acquire future prediction information on each of its own station and other lower nodes, the future prediction information indicating a traffic amount predicted, before a start of the radio communications, to be transmitted in the radio communications; a second acquisition unit (latest prediction unit 107) configured to acquire latest prediction information indicating a traffic amount predicted, when the own station starts the radio communications, to be transmitted in the radio communications; a third acquisition unit (measurement unit 102) configured to acquire channel use information on each of the own station and the other lower nodes, the channel use information indicating used amounts of the radio channels actually used in the radio communications; a calculation unit (calculation unit 108) configured to calculate a radio channel use probability for each of the plurality of radio channels on the basis of both the future prediction information acquired by the first acquisition unit and the channel use information acquired by the third acquisition unit; and a determination unit (determination unit 111) configured to determine one radio channel among the plurality of radio channels on the basis of the radio channel use probabilities calculated by the calculation unit, the one radio channel being to be assigned to the communication starting station. The calculation unit corrects the radio channel use probabilities on the basis of both the future prediction information on the own station and the latest prediction information on the own station.

In the second aspect, the lower node further includes a prediction unit (future prediction unit 106) configured to predict the future prediction information on its own station. The first acquisition unit acquires the future prediction information on the own station from the prediction unit, and acquires the future prediction information on the other lower nodes from the other lower nodes.

In the second aspect, the lower node further includes: a monitoring unit (monitoring unit 102) configured to monitor the radio channels actually used by the other lower nodes in the radio communications; and a prediction unit (future prediction unit 106) configured to predict the future prediction information on its own station. The first acquisition unit acquires the future prediction information on the own station from the prediction unit, and acquires the future prediction information on the other lower nodes on the basis of used amounts of the radio channels monitored by the monitoring unit.

An upper node of a third aspect performs radio communications with a plurality of lower nodes via a plurality of radio channels. The upper node includes: a first acquisition unit (future prediction information acquisition unit 206, or future prediction unit 221) configured to acquire future prediction information on each of the plurality of lower nodes, the future prediction information indicating a traffic amount predicted, before a start of the radio communications, to be transmitted in the radio communications; a second acquisition unit (latest prediction information acquisition unit 207, or latest prediction unit 222) configured to acquire latest prediction information on a communication starting station which is a lower node starting the radio communications among the plurality of lower nodes, the latest prediction information indicating a traffic amount predicted, at the start of the radio communications, to be transmitted in the radio communications; a third acquisition unit (measurement unit 202) configured to acquire channel use information on each of the plurality of lower nodes, the channel use information indicating used amounts of the radio channels actually used in the radio communications; a calculation unit (calculation unit 208) configured to calculate a radio channel use probability for each of the plurality of radio channels on the basis of both the future prediction information acquired by the first acquisition unit and the channel use information acquired by the third acquisition unit; and a determination unit (assignment unit 211) configured to determine one radio channel among the plurality of radio channels on the basis of the radio channel use probabilities calculated by the calculation unit, the one radio channel being to be assigned to the communication starting station. The calculation unit corrects the radio channel use probabilities on the basis of both the future prediction information on the communication starting station and the latest prediction information on the communication starting station.

In the third aspect, the first acquisition unit acquires the future prediction information from each of the plurality of lower nodes.

In the third aspect, the upper node further includes a monitoring unit (monitoring unit 202) configured to monitor the radio channels actually used by the plurality of lower nodes in the radio communications. The first acquisition unit acquires the future prediction information on each of the plurality of lower nodes on the basis of used amounts of the radio channels monitored by the monitoring unit.

According to the present invention, provided are a radio communication system, a lower node and an upper node which enable accuracy improvement in calculating use probabilities of communication channels, and a fair assignment of communication channels (frequencies) to respective communication apparatuses.

BRIEF DESCRIPTION OF THE DRAWINGS

[Fig. 1] Fig. 1 is a diagram showing a configuration of a radio communication system according to a first embodiment.
[Fig. 2] Fig. 2 is a block diagram showing a lower node 100 according to the first embodiment.
[Fig. 3] Fig. 3 is a diagram showing a calculation block (a first calculation unit 109) according to the first embodiment for update information "Δpi(t)".
[Fig. 4] Fig. 4 is a diagram showing a calculation block (the first calculation unit 109) according to the first embodiment for first adjusted use probabilities "p2i(t)".
[Fig. 5] Fig. 5 is a diagram showing a calculation block (a second calculation unit 110) according to the first embodiment for second adjusted use probabilities "p4i(t)".
[Fig. 6] Fig. 6 is a sequence diagram showing operations of the radio communication system according to the first embodiment.
[Fig. 7] Fig. 7 is a block diagram showing an upper node 200 according to a second embodiment.
[Fig. 8] Fig. 8 is a sequence diagram showing operations of the radio communication system according to the second embodiment.
[Fig. 9] Fig. 9 is a block diagram showing the lower node 100 according to a third embodiment.
[Fig. 10] Fig. 10 is a block diagram showing the upper node 200 according to the second embodiment.
[Fig. 11] Fig. 11 is a table showing specifications for simulation assessment.
[Fig. 12] Fig. 12 is a chart showing results of the simulation assessment.

BEST MODE FOR CARRYING OUT THE INVENTION

Radio communication systems according to embodiments of the present invention are described below with reference to the drawings. Note that, in the following description of the drawings, same or similar reference numerals denote same or similar components.

In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

[First embodiment]

(Configuration of radio communication system)

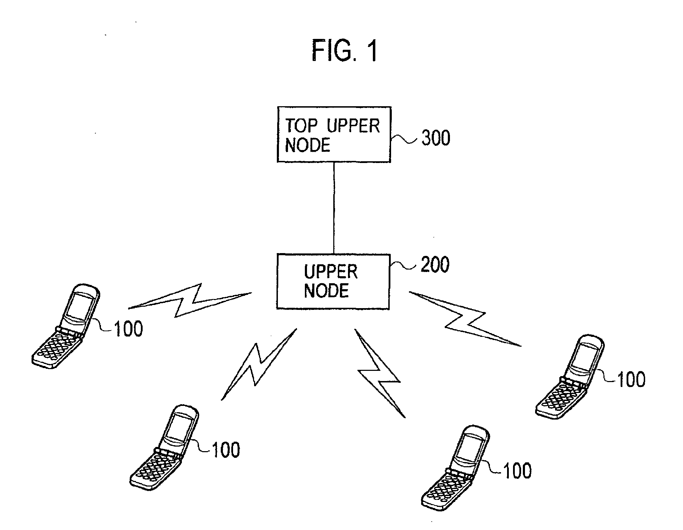

A configuration of a radio communication system according to a first embodiment is described below with reference to the drawings. Fig. 1 is a diagram showing the configuration of the radio communication system according to the first embodiment.

As shown in fig. 1, the radio communication system includes plural lower nodes 100, an upper node 200 and a top upper node 300.

Each of the lower nodes 100 is a terminal which performs radio communications with the upper node 200 via a radio channel. The lower node 100 is, for example, a mobile phone, a PDA, a notebook pc or the like. Details of the lower node 100 are described later.

The upper node 200 is an apparatus which performs radio communications with the plural lower nodes 100 via radio channels. The upper node 200 is, for example, a base station in a mobile communication network, an access point in a radio LAN, or the like.

The top upper node 300 is an apparatus which manages the upper node 200. Specifically, the top upper node 300 has a function of managing a radio channel established between the upper node 200 and the lower node 100. The top upper node 300 is, for example, an apparatus such as one (a radio controller (RNC; radio network controller)) which comprehensively manages plural ones of the upper nodes 200.

(Configuration of lower node)

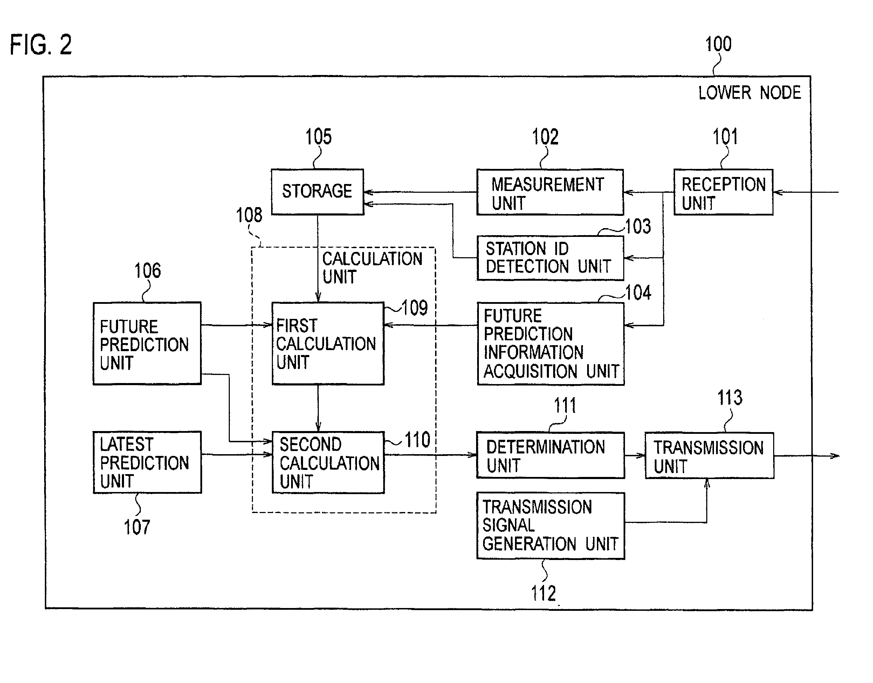

A configuration of each of the lower nodes according to the first embodiment is described below with reference to the drawings. Fig. 2 is a block diagram showing the configuration of the lower node 100 according to the first embodiment.

As shown in fig. 2, the lower node 100 includes a reception unit 101, a measurement unit 102, a station id detection unit 103, a future prediction information acquisition unit 104, a storage 105, a future prediction unit 106, a latest prediction unit 107, a calculation unit 108 (a first calculation unit 109 and a second calculation unit 110), a determination unit 111, a transmission signal generation unit 112, and a transmission unit 113.

The reception unit 101 receives a registration completion notification from the upper node 200, the registration completion notification notifying its own station that registration of a position of the own station is completed. The registration completion notification contains channel information indicating all of radio channels allowed to be established between the own station and the upper node 200. The channel information contains frequency bands, modulation methods, decoding methods and the like of the respective radio channels.

The reception unit 101 receives signals transmitted via radio channels currently actually being used by the other lower nodes 100. The signals transmitted via the radio channels contain station ids used for identifying the other lower nodes 100.

The reception unit 101 receives future prediction information from the other lower nodes 100, the future prediction information indicating traffic amounts predicted to be transmitted by the other lower nodes 100 in radio communications. It is preferable that the reception unit 101 periodically receive the future prediction information.

The measurement unit 102 measures radio channels on the basis of the signals received from the other lower nodes 100, the radio channels being used by the other lower nodes 100. That is, the measurement unit 102 monitors radio channels actually used by the other lower nodes 100.

On the basis of the signals received from the other lower nodes 100, the station id detection unit 103 detects station ids of the other lower nodes 100, which use the respective radio channels.

The future prediction information acquisition unit 104 acquires the future prediction information received by the reception unit 101 on each of the other lower nodes 100.

The storage 105 stores information used for associating the radio channels measured by the measurement unit 102 with the station ids detected by the station id detection unit 103. More specifically, the storage 105 stores used amounts (channel use information) of radio channels for each of the other lower nodes 100, the radio channels being actually used by the other lower nodes 100 in radio communications.

Note that the channel use information may be defined as time periods (hereinafter, used times) for which the radio channels are assigned to the respective lower nodes 100. The channel use information may be defined as frequency bandwidths of the radio channels assigned to the respective lower nodes 100. The channel use information may be defined as radio distances of signals transmitted via the radio channels assigned to the respective lower nodes 100. Note that the radio distances are distances from the respective lower nodes 100 to the upper node 200, and are estimated based on transmission powers of the respective lower nodes 100 or the upper node 200.

The storage 105 stores not only the channel use information on the other lower nodes 100 but also used amounts (channel use information) of the radio channels actually used by the own station in radio communications.

The future prediction unit 106 predicts a traffic amount before radio communications are started, the traffic amount being to be transmitted by the own station in the radio communication. More specifically, the future prediction unit 106 acquires future prediction information indicating the traffic amount predicted before the radio communication is started.

The latest prediction unit 107 predicts a traffic amount when radio communications are started, the traffic amount being to be transmitted by the own station in the radio communication. More specifically, the latest prediction unit 107 acquires latest prediction information indicating the traffic amount predicted when the radio communication is started.

Here, "before radio communications are started" means "before a communication start request requesting the start of radio communications is transmitted". "When radio communications are started" means "when the communication start request is transmitted", or "by the time when the radio communications are actually performed after the communication start request is transmitted".

The calculation unit 108 includes: the first calculation unit 109 configured to calculate the radio channel use probability for each of the radio channels by using the future prediction information; and the second calculation unit 110 configured to correct the radio channel use probability for each of the radio channels by using the latest prediction information. It should be noted that the use probabilities are probabilities where the lower nodes 100 (own terminals) use the respective radio channels.

The first calculation unit 109 acquires the channel use information on each of the other lower nodes 100 from the storage 105. The first calculation unit 109 acquires the future prediction information on each of the other lower nodes 100 from the future prediction information acquisition unit 104. The first calculation unit 109 acquires the channel use information on the own station from the storage 105. The first calculation unit 109 acquires the future prediction information on the own station from the future prediction unit 106.

Here, a total number of the other lower nodes 100, the channel use information (gains) of the other slave cannels 100, the future prediction information on the other slave cannels 100, the channel use information (gain) of the own station (the i-th lower node 100), and the future prediction information on the own station (the i-th lower node 100), are denoted as "n", "wj", "xj", "wi", and "xi", respectively.

Non-patent document 3 (H. Gintis, "Game Theory Evolving: A Problem-centered Introduction to Modeling Stratetig Behavior", Princeton University Press, 2000) shows that a utility function (u(xi)) of the each lower node 100 is expressed by the following equation (1).

[eq. 1]

$$U(x_i) = x_i - \frac{1}{n-1}\left( \alpha_i \sum_{\substack{x_j > x_i \\ w_j \ w_i}} \left( \frac{x_j}{w_j} - \frac{x_i}{w_i} \right) + \beta_i \sum_{\substack{x_i > x_j \\ w_i \ w_j}} \left( \frac{x_i}{w_i} - \frac{x_j}{w_j} \right) \right) \qquad \dots \text{Equation (1)}$$

Here, "αi" and "βi" are reaction coefficients, and satisfy a relation "αi > βi> 0". Specifically, while "αi" is a reaction coefficient for the other lower nodes having higher gains than the own station, "βi" is a reaction coefficient for the other lower nodes having lower gains than the own station.

The first calculation unit 109 calculates update information "Δpi" of the radio channel use probability for each of the radio channels by using the above described equation (1) (refer to equation (2)).

[eq. 2]

$$\Delta p_i = \frac{1}{n-1}\left(-\alpha_i \sum_{\substack{x_j > x_i \\ w_j \ w_i}} \left(\frac{x_j}{w_j} - \frac{x_i}{w_i}\right) + \beta_i \sum_{\substack{x_i > x_j \\ w_i \ w_j}} \left(\frac{x_i}{w_i} - \frac{x_j}{w_j}\right)\right) \qquad \dots \text{Equation (2)}$$

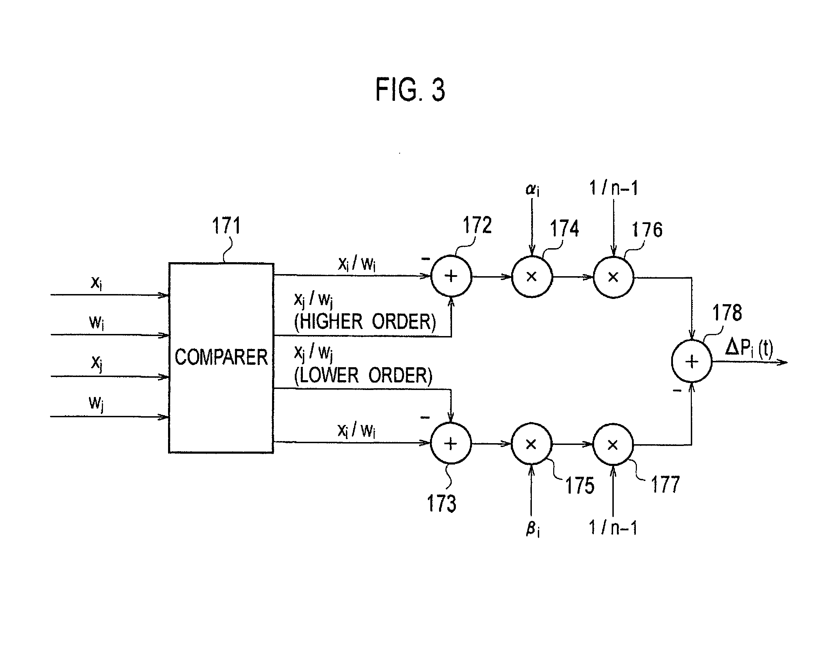

As shown in fig. 3, the update information "Δpi" is calculated by a comparer 171, an adder 172, an adder 173, a multiplier 174, a multiplier 175, a multiplier 176, a multiplier 177 and an adder 178. The comparer 171, adder 172, adder 173, multiplier 174, multiplier 175, multiplier 176, multiplier 177 and adder 178 are provided in the first calculation unit 109.

The comparer 171 compares "xi/wi" and "xj/wj". The comparer 171 outputs "xi/wi" and "xj/wj" to the adder 172 if "xi/wi" < "xj/wj". On the other hand, the comparer 171 outputs "xi/wi" and "xj/wj" to the adder 173 if "xi/wi" > "xj/wj".

The adder 172 adds up "-xi/wi" and "xj/wj". The adder 173 adds up "xi/wi" and "-xj/wj". The multiplier 174 multiplies "-xi/wi + xj/wj" by "αi". The multiplier 175 multiplies "xi/wi - xj/wj" by "βi".

The multiplier 176 multiplies a value outputted from the multiplier 174 by "1/n - 1". The multiplier 177 multiplies a value outputted from the multiplier 175 by "1/n - 1". The adder 178 subtracts a value outputted from the multiplier 177 from a value outputted from the multiplier 176.

Note that a use probability "pi(t)" of the radio channel at a time t is a value obtained by adding the update information "Δpi(t)" to a use probability "pi(t-1)" of the radio probability at a time t-1 (refer to equation (3))
[eq. 3]

$$p_i(t) = p_i(t-1) + \Delta p_i(t) \qquad \dots \text{Equation (3)}$$

Subsequently, the first calculation unit 109 corrects the use probability "pi(t)" of the radio channel by using a first correction coefficient "Ci". The correction coefficient "Ci" is found by use of "Call", "Ccoll.i", "Cblank,i" and "γ" (refer to equation (4)).

Note that "Call" is a value indicating an amount of frequency bands for all of the radio channels. "Ccoll,i" is a value indicating an amount (lost frequency band amount) of frequency bands for radio channels not assignable to any one of the lower nodes 100 due to signal collision and the like. Note that "Ccoll,i" is measured by the own station (the i-th lower node 100). "Cblank,i" is a value indicating an amount (unused frequency band amount) of frequency bands for radio channels not assigned to any one of the lower nodes 100. Note here that "Cblank,i" is measured by the own station (the i-th lower node 100). "Y" is a weighting coefficient for the lost frequency band amount.
[eq. 4]

$$C_i = \frac{C_{all} - \gamma C_{coll,i}}{C_{all} - C_{blank,i}} \qquad \dots \text{Equation (4)}$$

The first calculation unit 109 calculates a first corrected use probability "p1i(t)" by correcting the use probability "pi(t)" of the radio channel by using the first correction coefficient "Ci" (refer to equation (5)).
[eq. 5]

$$p1_i(t) = C_i \times p_i(t) \qquad \dots \text{Equation (5)}$$

The first calculation unit 109 adjusts the first corrected use probability "p1i(t)" so that a radio channel use probability may fall within an appropriate range. If an upper limit of the radio channel use probability, and a lower limit of the radio channel use probability are denoted as "Pmax", and "Pmin", respectively, a first adjusted use probability "p2i(t)" is expressed by the following equation (6).
[eq. 6]

$$p2_i(t) = \max(P_{\min}, \min(P_{\max}, p1_i(t))) \qquad \text{... Equation (6)}$$

Note that, while max( ) means that a maximum one of values listed in ( ) should be taken, min( ) means that a minimum one of values listed in ( ) should be taken. Pmin and Pmax are values in the range of 0 to 1. Pmin and Pmax may be determined in accordance with a relationship between the channel use information (gain) and the radio channel use probability.

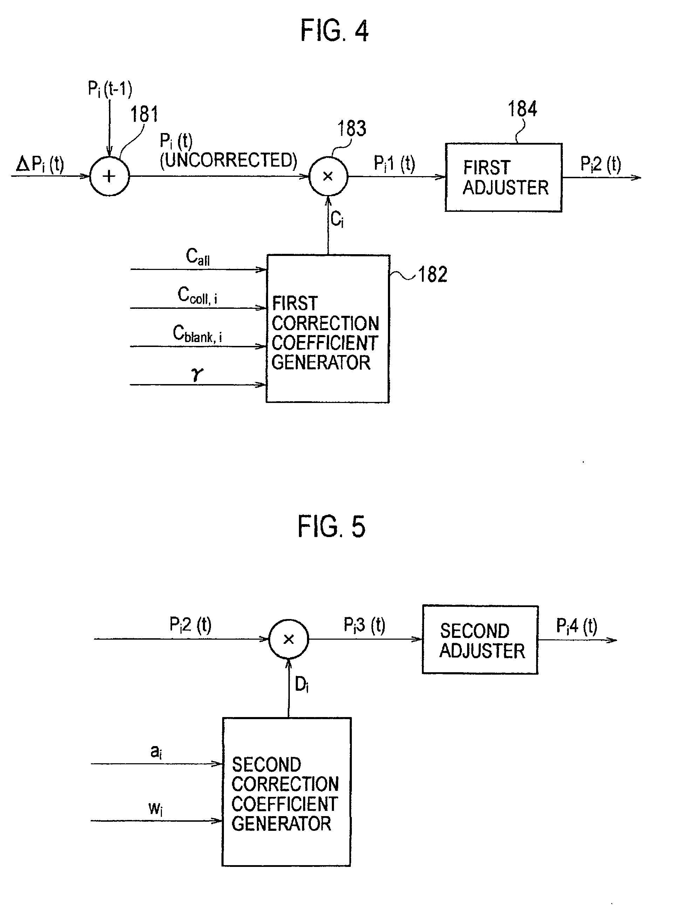

As shown in fig. 4, the first adjusted use probability "p2i(t)" is calculated by an adder 181, a first correction coefficient generator 182, a multiplier 183 and a first adjuster 184.

The adder 181, first correction coefficient generator 182, multiplier 183 and first adjuster 184 are provided in the first calculation unit 109.

The adder 181 performs processing of adding up "pi(t-1)" and "Δpi(t)" as shown by equation (3). The first correction coefficient generator 182 generates the first correction coefficient "Ci" as shown by equation (4). The multiplier 183 multiplies "pi(t)" by "Ci" as shown by equation (5). The first adjuster 184 adjusts the first corrected use probability "p1i(t)" as shown by equation (6).

The second calculation unit 110 acquires the first adjusted use probability "p2i(t)" from the first calculation unit 109. The second calculation unit 110 acquires the latest prediction information on the own station from the latest prediction unit 107. The second calculation unit 110 acquires the channel use information on the own station from the storage 105.

Here, the channel use information (gain) on the own station (the i-th lower node 100), and the latest prediction information on the own station (the i-th lower node 100) are denoted as "wi", and "ai", respectively.

The second calculation unit 110 first calculates a second correction coefficient "Di", and then corrects the first adjusted use probability "p2i(t)" by using the second correction coefficient "Di". Thereby, the second calculation unit 110 acquires a second corrected use probability "p3i(t)".

Specifically, the second calculation unit 110 calculates the second correction coefficient "Di" by using the following equation (7).

[eq. 7]

$$D_i = \begin{cases} \dfrac{a_i}{w_i} & (w_i > a_i) \\ 1 & (otherwise) \end{cases} \qquad \text{... Equation (7)}$$

Subsequently, the second calculation unit 110 calculates the second corrected use probability "p3i(t)" by the following equation (8).

[eq. 8]

$$p3_i(t) = D_i \times p2_i(t) \qquad \text{... Equation (8)}$$

As in the case of the first calculation unit 109, the second calculation unit 110 adjusts the second corrected use probability "p3i(t)" so that a radio channel use probability may fall within an appropriate range. If the upper limit of the radio channel use probability, and the lower limit of the radio channel use probability are denoted as "Pmax", and "Pmin", respectively, a second adjusted use probability "p4i(t)" is expressed by the following equation (9).

[eq. 9]

$$p4_i(t) = \max(P_{\min}, \min(P_{\max}, p3_i(t))) \qquad \text{... Equation (9)}$$

Note that, while max( ) means that a maximum one of values listed in ( ) should be taken, min( ) means that a minimum one of values listed in ( ) should be taken.

As shown in fig. 5, the second adjusted use probability "p4i(t)" is calculated by a second correction coefficient generator 191, an adder 192 and a second adjuster 193.

The second correction coefficient generator 191, adder 192 and second adjuster 193 are provided in the second calculation unit 110.

The second correction coefficient generator 191 generates the second correction coefficient "Di" as shown by equation (7). The multiplier 192 multiplies "p2i(t)" by "Di" as shown by equation (8). The second adjuster 193 adjusts the second corrected use probability "p2i(t)" as shown by equation (9).

Here, before the radio communications are started, the calculation unit 108 outputs a calculation result of the first calculation unit 109 as a final radio channel use probability. On the other hand, before the radio communications are started, the calculation unit 108 outputs a calculation result of the second calculation unit 110 as the final radio channel use probability.

On the basis of the calculation results (more specifically, the second adjusted use probabilities "p4i(t)") of the second calculation unit 110, the determination unit 111 determines a radio channel to be used for the radio communication. Specifically, the determination unit 111 sets up threshold values in accordance with the second adjusted use probabilities "p4i(t)". The determination unit 111 generates random numbers used in judgment as to whether or not to use the respective radio channels. Subsequently, the determination unit 111 determines a radio channel, which is assigned a random number higher than a corresponding one of the threshold values, as a radio channel to be used for the radio communication. Incidentally, it should be noted that the higher the second adjusted use probability "p4i(t)", the smaller the threshold value.

The transmission signal generation unit 112 generates a transmission signal transmitted in the radio communication.

The transmission unit 113 transmits a position registration request to the upper node 200, the position registration request requesting registration of a position of the own station. The transmission unit 113 transmits a communication start request to the upper node 200, the communication start request requesting the start of the radio communication. The communication start request contains information requesting that the radio channel determined by the determination unit 111 be assigned. The transmission unit 113 transmits the transmission signal to the upper node 200 by using the radio channel assigned by the upper node 200.

(Operations of radio communication system)

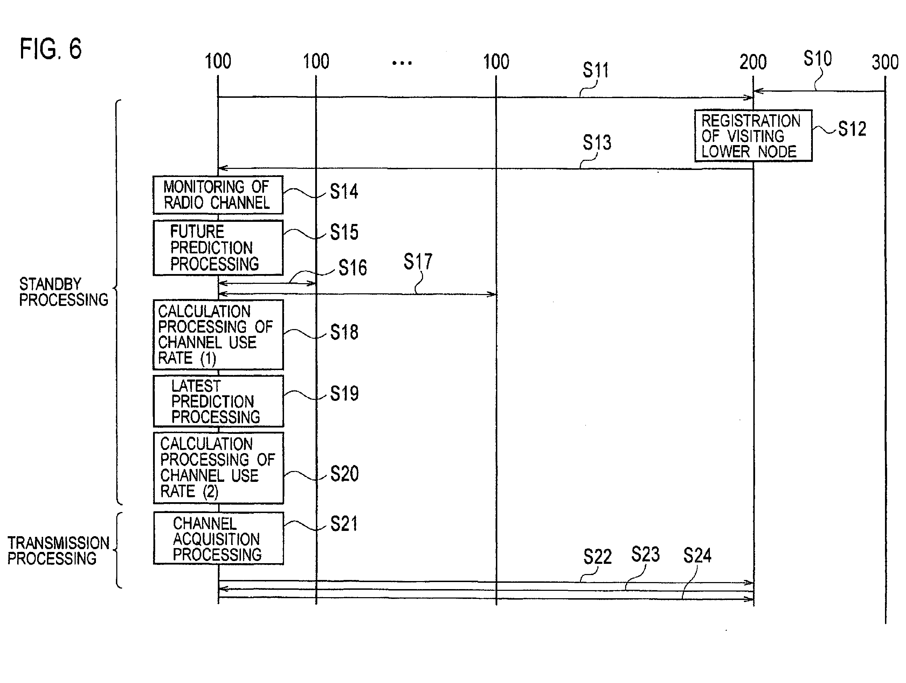

Operations of the radio communication system according to the first embodiment are described below with reference to the drawings. Fig. 6 is a sequence diagram showing operations of the radio communication system according to the first embodiment.

As shown in fig. 6, in step 10, the top upper node 300 notifies the upper node 200 of all of radio channels available to the upper node 200.

In step 11, any one of the lower nodes 100 notifies the upper node 200 of a position registration request requesting registration of a position of the lower node 100.

In step 12, the upper node 200 registers the position of the lower node 100, which transmits the position registration request, in a db (such as an HLR or a VLR).

In step 13, the upper node 200 transmits a registration completion notification to the lower node 100, the registration completion notification notifying the lower node 100 that the registration of the positions of the lower node 100 is completed.

In step 14, the lower node 100 monitors radio channels actually used by the other lower nodes 100 in radio communications. Thereby, the lower node 100 acquires the channel use information on each of the other lower nodes 100.

In step 15, the lower node 100 predicts a traffic amount transmitted by the station itself in a radio communication. The lower node 100 acquires the future prediction information indicating the traffic amount predicted to be transmitted by the station itself in the radio communication.

In steps 16 and 17, the lower node 100 transmits the future prediction information generated in step 15 to the other lower nodes 100. Additionally, the lower node 100 receives the future prediction information, which is generated by the other lower nodes 100, from the other lower nodes 100.

Here, in a case where communications are not allowed between the lower nodes 100, the respective lower nodes 100 may transmit the future prediction information generated in step 15 to the upper node 200. To the respective lower nodes 100, the upper node 200 may transmit all of the future prediction information received from the respective lower nodes 100.

In step 18, the lower node 100 calculates the radio channel use probability for each of the radio channels by using the future prediction information. More specifically, the lower node 100 acquires the above described first adjusted use probabilities "p2i(t)".

Incidentally, it should be noted that processing from steps 15 to 18 is repeated with a predetermined period.

In step 19, the lower node 100 predicts a traffic amount transmitted by the station itself in the radio communication. The lower node 100 acquires the latest prediction information indicating the traffic amount predicted to be transmitted by the own station in the radio communication. It should be noted that when to acquire the latest prediction information is not when to periodically acquires the future prediction information, but is when this lower node 100 starts the communication.

In step 20, the lower node 100 corrects the radio channel use probability for each of the radio channels by using the latest prediction information. That is, the lower node 100 acquires the above mentioned second adjusted use probability "p4i(t)".

In step 21, the lower node 100 determines a radio channel on the basis of results of step 20 (more specifically, the second adjusted use probability "p4i(t)"), the radio channel being to be used for the radio communication. Specifically, the lower node 100 sets up threshold values in accordance with the second adjusted use probability "p4i(t)". The lower node 100 generates random numbers used for judgment as to whether to use the respective radio channels. Subsequently, the lower node 100 determines a radio channel, which is assigned a random number higher than a corresponding one of the threshold values, as a radio channel to be used for the radio communication.

In step 22, this lower node 100 transmits a communication start request to the upper node 200, the communication start request requesting the start of the radio communication. The communication start request contains information requesting that the radio channel determined in step 21 be assigned.

In step 23, the upper node 200 transmits information to the lower node 100 in response to the request for the assignment, the information indicating whether or not the assignment of the radio channel is permitted. Here, it is assumed that the assignment of the radio channel is permitted.

In step 24, the lower node 100 transmits a transmission signal to the upper node 200 via the radio channel assigned by the upper node 200. Note that, if the assignment of the radio channel is not permitted, the lower node 100 returns to the processing in step 21, and determines again a radio channel to be used for the radio communication.

(Advantageous effects)

According to the first embodiment, the calculation unit 108 calculates the radio channel use probabilities on the basis of the future prediction information and channel use information which are acquired for each of the lower nodes. Additionally, the calculation unit 108 corrects the radio channel use probabilities on the basis of the future prediction information and latest prediction information on its own station.

More specifically, a fair assignment of communication channels (frequencies) to communication apparatuses is enabled by calculating the radio channel use probabilities by using the future prediction information and channel use information. Additionally, accuracies of calculating the radio channel use probabilities are improvable by correcting the radio channel use probabilities on the basis of the future prediction information and latest prediction information on the communication starting station.

[Second embodiment]

A second embodiment is described below with reference to the drawings. Differences between the above described first embodiment and the second embodiment are mainly described below.

Specifically, in the above described first embodiment, a subject which calculates the radio channel use probabilities is each of the lower nodes 100. In contrast, in the second embodiment, a subject which calculates the radio channel use probabilities is the upper node 200.

(Configuration of upper node)

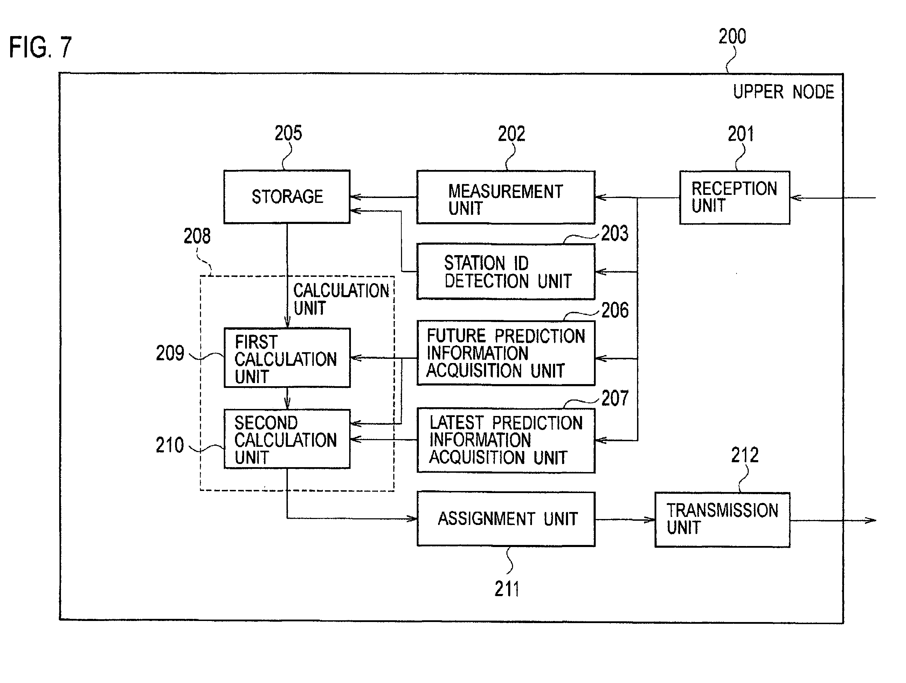

A configuration of an upper node according to the second embodiment is described below with reference to the drawings. Fig. 7 is a block diagram showing the upper node 200 according to the second embodiment.

As shown in fig. 7, the upper node 200 includes a reception unit 201, a measurement unit 202, a station id detection unit 203, a storage 205, a future prediction information acquisition unit 206, a latest prediction information acquisition unit 207, a calculation unit 208 (a first calculation unit 209 and a second calculation unit 210), an assignment unit 211 and a transmission unit 212.

The reception unit 201 receives a position registration request requesting registration of a position of the lower node 100. The reception unit 201 receives signals transmitted through radio channels actually used by the respective lower nodes 100. The signals transmitted via the radio channels contain station ids used for identifying the respective lower nodes 100. The reception unit 201 receives a communication start request from any one of the lower nodes 100 (a communication starting station), the communication start request requesting the start of the radio communication.

The reception unit 201 receives future prediction information from the respective lower nodes 100, the future prediction information indicating traffic amounts predicted to be transmitted by the respective lower nodes 100 in radio communications. Note that the respective lower nodes 100 predict the traffic amounts to be transmitted by the own stations in the radio communications, and transmits the future prediction information indicating the traffic amounts to the upper node 200. It is preferable that the reception unit 201 periodically receive the future prediction information.

The reception unit 201 receives latest prediction information from any one of the lower nodes 100 (the communication starting station) which starts a radio communication, the latest prediction information indicating traffic amounts predicted to be transmitted by the respective lower nodes 100 in radio communications. Note that the lower node 100 (the communication starting station) predicts a traffic amount to be transmitted by the station itself in the radio communication, and transmits the latest prediction information indicating the traffic amount to the upper node 200.

The measurement unit 202 measures radio channels on the basis of the signals received from the other lower nodes 100 as in the case of the measurement unit 102, the radio channels being used by the respective lower nodes 100. More specifically, the measurement unit 202 monitors radio channels actually used by the respective lower nodes 100 in the radio communication.

As in the case of the station id detection unit 103, on the basis of the signals received from the other lower nodes 100, the station id detection unit 203 detects station ids of the lower nodes 100, which use the respective radio channels.

As in the case of the storage 105, the storage 205 stores information used for associating the radio channels measured by the measurement unit 202 with the station ids detected by the station id detection unit 203. More specifically, the storage 205 stores used amounts (channel use information) of the radio channels for each of the lower nodes 100, the radio channels being actually used by the respective lower nodes 100 in radio communications.

Note that the channel use information may be defined as time periods (hereinafter, used times) for which the radio channels are being assigned to the other lower nodes 100. The channel use information may be defined as bandwidths of the radio channels assigned to the other lower nodes 100. The channel use information may be defined as radio distances of signals transmitted via the radio channels assigned to the other lower nodes 100. Further, the channel use information may be defined as combinations of the used times, the bandwidths and the radio distances.

For each of the lower nodes 100, the future prediction information acquisition unit 206 acquires the future prediction information received by the reception unit 201.

The latest prediction information acquisition unit 207 acquires the latest prediction information received by the reception unit 201.

As in the case of the calculation unit 108, the calculation unit 208 includes: the first calculation unit 209 configured to calculate a radio channel use probability for each of the radio channels by using the future prediction information; and the second calculation unit 210 configured to correct the radio channel use probability for each of the radio channels by using the latest prediction information.

The first calculation unit 209 acquires the channel use information on each of the plural lower nodes 100 from the storage 105. The first calculation unit 209 acquires the future prediction information on each of the plural lower nodes 100 from the future prediction information acquisition unit 206.

As in the case of the first calculation unit 109, the first calculation unit 209 calculates the first adjusted use probabilities "p2i(t)" for each of the lower nodes 100.

Note that, although the i-th lower node 100 is the own station in the first embodiment, the i-th lower node 100 is a controlled station (for example, the communication starting station) in the second embodiment.

The second calculation unit 210 acquires the first adjusted use probabilities "p2i(t)" from the first calculation unit 209. The second calculation unit 210 acquires the latest prediction information on one of the lower nodes 100 (the communication starting station) from the latest prediction information acquisition unit 207.

As in the case of the second calculation unit 110, the second calculation unit 210 calculates the second adjusted use probabilities "p4i(t)".

Here, before the radio communications are started, the calculation unit 208 outputs calculation results of the first calculation unit 209 as final radio channel use probabilities. On the other hand, before the radio communications are started, the calculation unit 208 outputs calculation results of the second calculation unit 210 as the final radio channel use probabilities.

On the basis of the calculation results (more specifically, the second adjusted use probabilities "p4i(t)") of the second calculation unit 210, the assignment unit 211 assigns a radio channel to be used for the radio communication. Specifically, the assignment unit 211 sets up threshold values in accordance with the second adjusted use probabilities "p4i(t)". The assignment unit 211 generates random numbers used in judgment as to whether or not to use the respective radio channels. Subsequently, the assignment unit 211 determines a radio channel, which is assigned a random number higher than a corresponding one of the threshold values, as the radio channel to be used for the radio communication. Further, the assignment unit 211 assigns the radio channel to be used for the radio communications to the lower node 100 (the communication starting station). Incidentally, it should be noted that the higher the second adjusted use probability "p4i(t)", the smaller the threshold value.

The transmission unit 212 transmits a registration completion notification to each of the lower nodes 100, the registration completion notification notifying the lower node 100 that registration of a position of the lower node 100 is completed. The registration completion notification contains channel information indicating all of radio channels allowed to be established between the lower node 100 and the upper node 200. The channel information contains frequency bands, modulation methods, decoding methods and the like of the respective radio channels. The transmission unit 212 transmits channel assignment information to the one (the communication starting station) of the lower nodes 100, the channel assignment information indicating a radio channel assigned to the lower node 100 (the communication starting station).

(Operations of radio communication system)

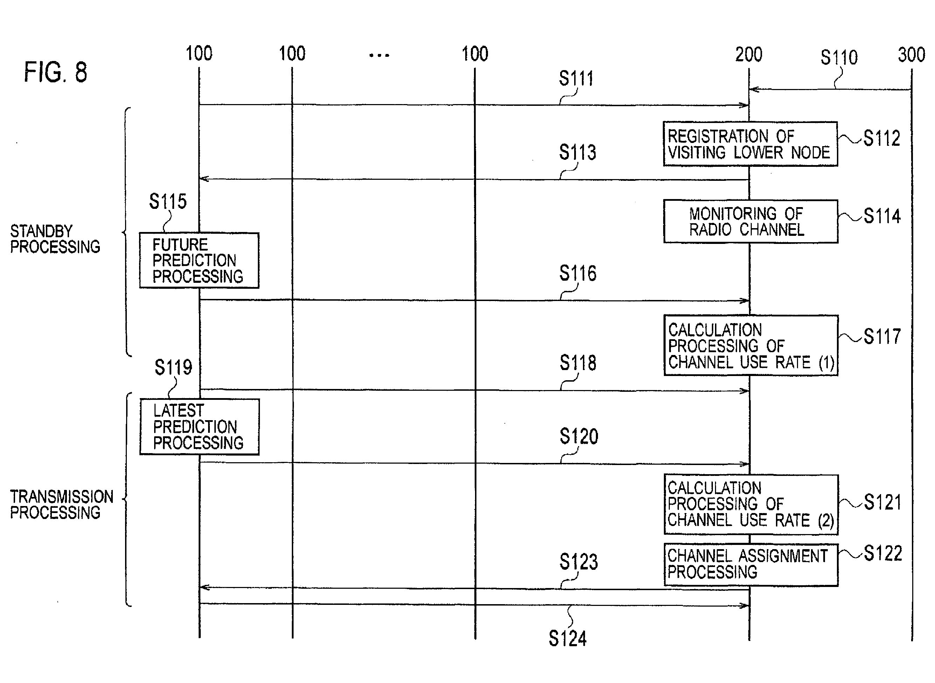

Operations of a radio communication system according to the second embodiment are described below with reference to the drawings. Fig. 8 is a sequence diagram showing operations of the radio communication system according to the second embodiment.

As shown in fig. 8, in step 110, the top upper node 300 notifies the upper node 200 of all of radio channels available to the upper node 200.

In step 111, any one of the lower nodes 100 notifies the upper node 200 of a position registration request requesting registration of a position of the lower node 100.

In step 112, the upper node 200 registers the position of the lower node 100, which transmits the position registration request, in a DB (such as an HLR or a VLR).

In step 113, the upper node 200 transmits a registration completion notification to the lower nodes 100, the registration completion notification notifying the lower node 100 that the registration of the position of the lower node 100 is completed.

In step 114, the upper node 200 monitors radio channels actually used by the respective lower nodes 100 in radio communications. Thereby, the upper node 200 acquires the channel use information on each of the lower nodes 100.

In step 115, the one of the lower nodes 100 predicts a traffic amount transmitted by the station itself in a radio communication. The lower node 100 acquires the future prediction information indicating the traffic amount predicted to be transmitted by the station itself in the radio communication.

In steps 116, the lower node 100 transmits the future prediction information generated in step 115 to the upper node 200. Additionally, the other lower nodes 100 transmit the future prediction information generated by the other lower nodes 100 to the upper node 200..

In step 117, the upper node 200 calculates a radio channel use probability for each of the radio channels by using the future prediction information. More specifically, the upper node 200 acquires the above described first adjusted use probabilities "p2i(t)".

Incidentally, it should be noted that processing from steps 115 to 117 is repeated with a predetermined period.

In step 118, the one (the communication starting station) of the lower nodes 100 transmits a communication start request to the upper node 200, the communication start request requesting that the radio communications be started.

In step 119, the lower node 100 (the communication starting station) predicts a traffic amount transmitted by the station itself in the radio communication. The lower node 100 (the communication starting station) acquires the latest prediction information indicating the traffic amount predicted to be transmitted by the station itself in the radio communication. It should be noted that when to acquire the latest prediction information is not when to periodically acquires the future prediction information, but is when the lower node 100 starts the communication.

In step 120, the lower node 100 (the communication starting station) transmits the future prediction information generated in step 119 to the upper node 200.

In step 121, the upper node 200 corrects the radio channel use probability for each of the radio channels by using the latest prediction information. More specifically, the upper node 200 acquires the above mentioned second adjusted use probability "p4i(t)".

In step 122, the upper node 200 assigns a radio channel on the basis of results of step 121 (more specifically, the second adjusted use probability "p4i(t)"), the radio channel being to be used for the radio communication. Specifically, the upper node 200 sets up threshold values in accordance with the second adjusted use probability "p4i(t)". The upper node 200 generates random numbers used for judgment as to whether to use the respective radio channels. Subsequently, the upper node 200 determines a radio channel, which is assigned a random number higher than a corresponding one of the threshold values, as a radio channel to be used for the radio communication. Further, the upper node 200 assigns the radio channel to be used for the radio communications to the lower node 100 (the communication starting station).

In step 123, the upper node 200 transmits channel assignment information to the lower node 100 (the communication starting station), the channel assignment information indicating the radio channel assigned in step 122.

In step 124, the lower node 100 (the communication starting station) transmits a transmission signal to the upper node 200 via the radio channel assigned by the upper node 200.

(Advantageous effects)

According to the second embodiment, the calculation unit 208 calculates the radio channel use probabilities on the basis of the future prediction information and channel use information which are acquired for each of the lower nodes. Additionally, the calculation unit 208 corrects the radio channel use probabilities on the basis of the future prediction information and latest prediction information on one (a communication starting station) of the lower nodes 100.

More specifically, a fair assignment of communication channels (frequencies) to communication apparatuses is enabled by calculating the radio channel use probabilities by using the future prediction information and channel use information. Additionally, accuracies of calculating the radio channel use probabilities are improvable by correcting the radio channel use probabilities on the basis of the future prediction information and latest prediction information on the communication starting station.

[Third embodiment]

A third embodiment is described below with reference to the drawings. Differences between the above described first embodiment and the third embodiment are mainly described below.

Specifically, in the above described first embodiment, each of the lower nodes 100 receives the future prediction information with respect to the other lower nodes 100 from the other lower nodes 100. In contrast, in the third embodiment, each of the lower nodes 100 itself predicts the future prediction information with respect to the other lower nodes 100.

(Configuration of lower node)

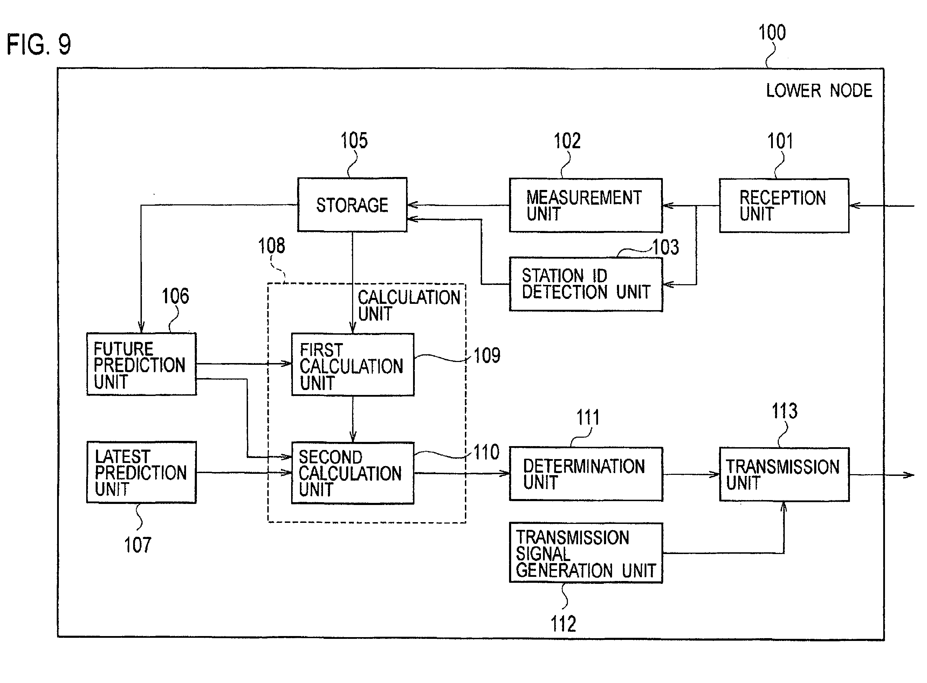

A configuration of a lower node according to the third embodiment is described below with reference to the drawings. Fig. 9 is a block diagram showing the lower node 100 according to the third embodiment. It should be noted that, in fig. 9, the same reference numerals are assigned to the same components as those in fig. 2.

As shown in fig. 9, the lower node 100 does not include the future prediction information acquisition unit 104, compared to the configuration in fig. 2.

The future prediction unit 106 is connected to the storage 105, and acquires the channel use information from the storage 105. Subsequently, on the basis of the channel use information (more specifically, use histories of the radio channels), the future prediction unit 106 predicts traffic amounts to be transmitted by the other lower nodes 100 in radio communications. The future prediction unit 106 acquires the future prediction information indicating the traffic amounts predicted to be transmitted by the other lower nodes 100 in radio communications.

Note that description of the other components is omitted since operations and function of the other components are the same as those in the first embodiment.

[Fourth embodiment]

A fourth embodiment is described below with reference to the drawings. Differences between the above described second embodiment and the fourth embodiment are mainly described below.

Specifically, in the above described second embodiment, the upper node 200 receives the future prediction information on the respective lower nodes 100 from the respective lower nodes 100. In contrast, the upper node 200 itself predicts the future prediction information on the respective lower nodes 100 in the fourth embodiment.

Additionally, in the above described second embodiment, the upper node 200 receives the latest prediction information with respect to one (a communication starting station) of the lower nodes 100 from the lower node 100 (the communication starting station). In contrast, the upper node 200 itself predicts the latest prediction information with respect to the lower node 100 (the communication starting station) in the fourth embodiment.

(Configuration of upper node)

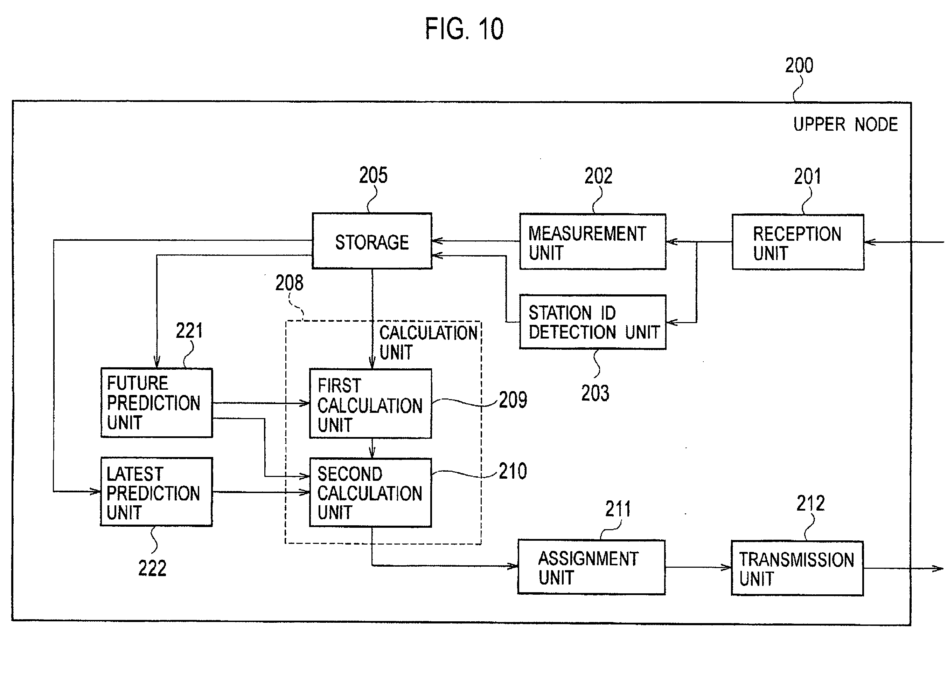

A configuration of an upper node according to the fourth embodiment is described below with reference to the drawings. Fig. 10 is a block diagram showing the upper node 200 according to the fourth embodiment. It should be noted that, in fig. 10, the same reference numerals are assigned to the same components as those in fig. 7.

As shown in fig. 10, the upper node 200 includes a future prediction unit 221 and a latest prediction unit 222 in place of the future prediction information acquisition unit 206 and the latest prediction information acquisition unit 207, compared to the configuration in fig. 7.

The future prediction unit 221 and the latest prediction unit 222 are connected to the storage 205, and acquire the channel use information from the storage 205.

On the basis of the channel use information (more specifically, use histories of the radio channels), the future prediction unit 221 predicts traffic amounts to be transmitted by the respective lower nodes 100 in radio communications. The future prediction unit 221 acquires the future prediction information indicating the traffic amounts predicted to be transmitted by the respective lower nodes 100 in the radio communications.

On the basis of the channel use information (more specifically, the use histories of the radio channels), the latest prediction unit 222 predicts a traffic amount to be transmitted by one of the respective lower node 100 (a communication starting station) in a radio communication. The latest prediction unit 222 acquires the latest prediction information indicating the traffic amount predicted to be transmitted by the lower node 100 (the communication starting station) in the radio communication.

Note that description of the other components is omitted since operations and function of the other components are the same as those in the second embodiment.

[Assessment Result]

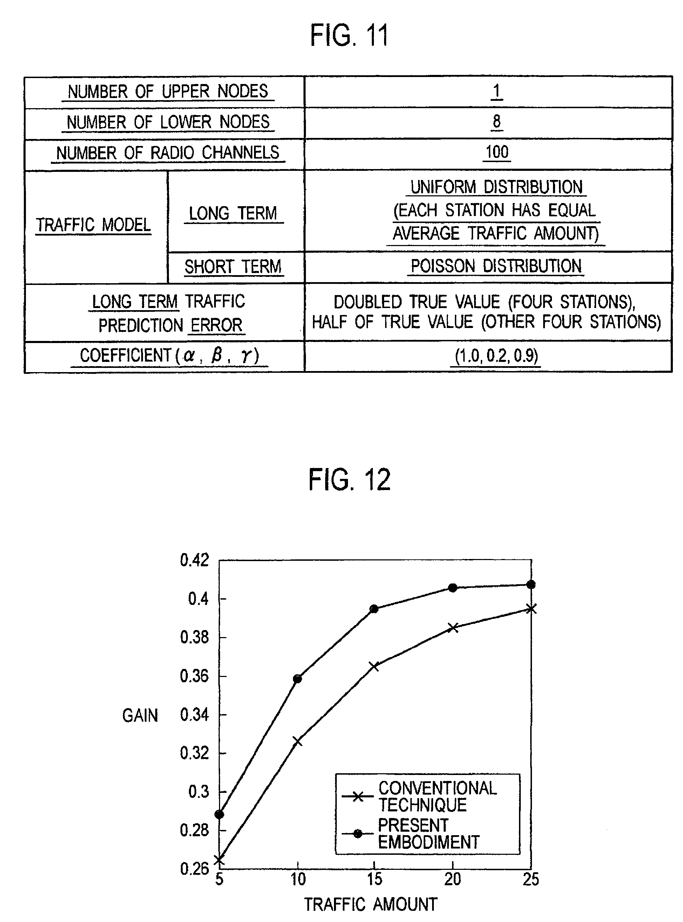

A result of simulation assessment is described below. Fig. 11 is a table showing specifications of the simulation assessment. Fig. 12 is a chart showing the result of the simulation assessment. Note that Fig. 12 is a chart showing a result of comparison between a conventional technique and this embodiment.

The conventional technique corresponds to a case where radio channel use probabilities are calculated without using the latest prediction information and by using only the future prediction information. This embodiment corresponds to a case where, as described above, the radio channel use probabilities are calculated by using not only the future prediction information but also the latest prediction information.

As shown in Fig. 12, it is confirmed that gains of the lower nodes 100 are improved in this embodiment as compared to the conventional technique. More specifically, it is confirmed that signal collision and resource wasting are avoidable in this embodiment as compared to the conventional technique.

[Other Embodiments]

As described above, the details of the present invention have been disclosed by using the embodiments of the present invention. However, it should not be understood that the description and drawings which constitute part of this disclosure limit the present invention. From this disclosure, various alternative embodiments, examples, and operation techniques will be easily found by those skilled in the art.

In the above described embodiment, the first corrected use probabilities "p1i(t)" are adjusted into the first adjusted use probabilities "p2i(t)". However, the present invention is not limited to this adjustment. For example, in a case where relationships of the channel use information (gains) with the radio channel use probabilities are already known, this adjustment processing may be omitted.

In the above described embodiment, the second corrected use probabilities "p3i(t)" are adjusted into the second adjusted use probabilities "p4i(t)". However, the present invention is not limited to this adjustment. For example, in a case where relationships of the channel use information (gains) with the radio channel use probabilities are already known, this adjustment processing may be omitted.

Although not being mentioned in the above described embodiment, the plural lower nodes 100 may be previously divided into groups. In such a case, radio channel use probabilities are calculated for radio channels assigned to the respective groups.

Although not being mentioned in the above described embodiment, it is preferable that the channel use information be defined in accordance with applications used in the lower nodes 100. Examples of the application include: an application (for example, for a voice communication configured to continuously transmit data in a long time period with relatively narrow frequency bands; and an application configured to transmit a large amount of data in a relatively short time period with wide frequency bands. With these cases taken into consideration, it is preferable that the channel use information be defined as products of used times of radio channels and bandwidths of the radio channels.

Although not being mentioned in the above described embodiment, it is preferable that the channel use information be defined in accordance with transmission powers of the lower nodes 100. For example, in a case where different communication systems are used, if a transmission power of one of the lower nodes 100 is high, a radio channel used by this lower node 100 is not usable by the other lower nodes 100 over a relatively wide range. With this case taken into consideration, it is preferable that the channel use information be defined as products of bandwidths of radio channels and radio distances by which signals are transmitted via the radio channels.

INDUSTRIAL APPLICABILITY

As described above, the radio communication system, the lower nodes and the upper node according to the present invention makes it possible to provide a radio communication system, lower nodes and an upper node which enable: improvement in accuracies of calculating use probabilities of communication channels; and a fair assignment of communication channels (frequencies) to the respective communication apparatuses.

**Claims**

1. A radio communication system which includes a plurality of lower nodes (100) and an upper node (200), and performs radio communications between the plurality of lower nodes and the upper node via a plurality of radio channels, the radio communication system comprising:

   a first acquisition unit (104, 106, 206, 221) configured to acquire future prediction information on each of the plurality of lower nodes, the future prediction information indicating a traffic amount predicted, before a start of the radio communications, to be transmitted in the radio communications;
   a second acquisition unit (107, 207, 22) configured to acquire latest prediction information on a communication starting station that is a lower node starting the radio communications among the plurality of lower nodes, the latest prediction information indicating a traffic amount predicted, at the start of the radio communications, to be transmitted in the radio communications;
   a third acquisition unit (102, 202) configured to acquire channel use information on each of the plurality of lower nodes, the channel use information indicating used amounts of radio channels actually used in the radio communications;
   a calculation unit (108, 208) configured to calculate a radio channel use probability for each of the plurality of radio channels on the basis of both the future prediction information acquired by the first acquisition unit and the channel use information acquired by the third acquisition unit; and
   a determination unit (111, 211) configured to determine one radio channel among the plurality of radio channels on the basis of the radio channel use probabilities calculated by the calculation unit, the one radio channel being to be assigned to the communication starting station,
   wherein the calculation unit corrects the radio channel use probabilities on the basis of the future prediction information on the communication starting station, and the latest prediction information on the communication starting station.

2. The radio communication system according to claim 1, wherein the calculation unit corrects the radio channel use probabilities on the basis of an unused radio channel which is a radio channel not assigned to any one of the plurality of lower nodes, among the plurality of radio channels.

3. The radio communication system according to claim 1, wherein the calculation unit corrects the radio channel use probabilities on the basis of a lost radio channel which is a radio channel not assignable to any one of the plurality of lower nodes, among the plurality of radio channels.

4. The radio communication system according to claim 1, wherein the third acquisition unit acquires the channel use information on the basis of a time period for which the radio channels are assigned in the radio communications.

5. The radio communication system according to claim 1, wherein the third acquisition unit acquires the channel use information on the basis of bandwidths of the radio channels assigned in the radio communications.

6. The radio communication system according to claim 1, wherein the third acquisition unit acquires the channel use information on the basis of radio distances of signals transmitted via the radio channels assigned in the radio communications.

7. The radio communication system according to claim 1, wherein:

   each of the plurality of lower nodes includes a prediction unit configured to predict the future prediction information on the station itself; and
   the first acquisition unit acquires the future prediction information from each of the plurality of lower nodes.

8. The radio communication system according to claim 1, further comprising a monitoring unit configured to monitor the radio channels actually used by the plurality of lower nodes in the radio communications,
   wherein the first acquisition unit acquires the future prediction information on each of the plurality of lower nodes, on the basis of used amounts of the radio channels monitored by the monitoring unit.

9. A lower node (100) which performs radio communications with an upper node (200) via at least any one of a plurality of radio channels, comprising:

a first acquisition unit (104, 106) configured to acquire future prediction information on each of its own station and other lower nodes, the future prediction information indicating a traffic amount predicted, before a start of the radio communications, to be transmitted in the radio communications;

a second acquisition unit (107) configured to acquire latest prediction information indicating a traffic amount predicted, when the own station starts the radio communications, to be transmitted in the radio communications;

a third acquisition unit (102) configured to acquire channel use information on each of the own station and the other lower nodes, the channel use information indicating used amounts of the radio channels actually used in the radio communications;

a calculation unit (108) configured to calculate a radio channel use probability for each of the plurality of radio channels on the basis of both the future prediction information acquired by the first acquisition unit and the channel use information acquired by the third acquisition unit; and

a determination unit (111) configured to determine one radio channel among the plurality of radio channels on the basis of the radio channel use probabilities calculated by the calculation unit, the one radio channel being to be assigned to the communication starting station,

wherein the calculation unit corrects the radio channel use probabilities on the basis of both the future prediction information on the own station and the latest prediction information on the own station.

10. The lower node according to claim 9, further comprising a prediction unit configured to predict the future prediction information on its own station,

wherein the first acquisition unit acquires the future prediction information on the own station from the prediction unit, and acquires the future prediction information on the other lower nodes from the other lower nodes.

11. The lower node according to claim 9, further comprising:

a monitoring unit configured to monitor the radio channels actually used by the other lower nodes in the radio communications; and

a prediction unit configured to predict the future prediction information on its own station,

wherein the first acquisition unit acquires the future prediction information on the own station from the prediction unit, and acquires the future prediction information on the other lower nodes on the basis of used amounts of the radio channels monitored by the monitoring unit.

12. An upper node (200) which performs radio communications with a plurality of lower nodes (100) via a plurality of radio channels, comprising:

a first acquisition unit (206, 221) configured to acquire future prediction information on each of the plurality of lower nodes, the future prediction information indicating a traffic amount predicted, before a start of the radio communications, to be transmitted in the radio communications;

a second acquisition unit (207, 222) configured to acquire latest prediction information on a communication starting station which is a lower node starting the radio communications among the plurality of lower nodes, the latest prediction information indicating a traffic amount predicted, at the start of the radio communications, to be transmitted in the radio communications;

a third acquisition uni (202) configured to acquire channel use information on each of the plurality of lower nodes, the channel use information indicating used amounts of the radio channels actually used in the radio communications;

a calculation unit (208) configured to calculate a radio channel use probability for each of the plurality of radio channels on the basis of both the future prediction information acquired by the first acquisition unit and the channel use information acquired by the third acquisition unit; and

a determination unit (211) configured to determine one radio channel among the plurality of radio channels on the basis of the radio channel use probabilities calculated by the calculation unit, the one radio channel being to be assigned to the communication starting station,

wherein the calculation unit corrects the radio channel use probabilities on the basis of both the future prediction information on the communication starting station and the latest prediction information on the communication starting station.

13. The upper node according to claim 12, wherein the first acquisition unit acquires the future prediction information from each of the plurality of lower nodes.

14. The upper node according to claim 12, further comprising a monitoring unit configured to monitor the radio channels actually used by the plurality of lower nodes in the radio communications,
wherein the first acquisition unit acquires the future prediction information on each of the plurality of lower nodes on the basis of used amounts of the radio channels monitored by the monitoring unit.

**Patentansprüche**

1. Funkkommunikationssystem, welches mehrere untere Knoten (100) und einen oberen Knoten (200) umfasst und über mehrere Funkkanäle Funkkommunikation zwischen den mehreren unteren Knoten und dem oberen Knoten durchführt, wobei das Funkkommunikationssystem das Folgende umfasst:

eine erste Erfassungseinheit (104, 106, 206, 221), welche dafür konfiguriert ist, Zukunftsvoraussageinformationen über jeden der mehreren unteren Knoten zu erfassen, wobei die Zukunftsvoraussageinformationen eine vor einem Start der Funkkommunikation vorausgesagte Datenverkehrsmenge anzeigen, die bei der Funkkommunikation zu senden ist;
eine zweite Erfassungseinheit (107, 207, 22), welche dafür konfiguriert ist, letzte Voraussageinformationen über eine Kommunikationsanfangsstation zu erfassen, welche ein unterer Knoten der mehreren unteren Knoten ist, der die Funkkommunikation beginnt, wobei die letzten Voraussageinformationen eine beim Start der Funkkommunikation vorausgesagte Datenverkehrsmenge anzeigen, die bei der Funkkommunikation zu senden ist;
eine dritte Erfassungseinheit (102, 202), welche dafür konfiguriert ist, Kanalnutzungsinformationen über jeden der mehreren unteren Knoten zu erfassen, wobei die Kanalnutzungsinformationen genutzte Mengen an Funkkanälen anzeigen, die bei der Funkkommunikation tatsächlich benutzt werden;
eine Berechnungseinheit (108, 208), welche dafür konfiguriert ist, für jeden der mehreren Funkkanäle auf der Grundlage sowohl der Zukunftsvoraussageinformationen, die von der ersten Erfassungseinheit erfasst werden, als auch der Kanalnutzungsinformationen, die von der dritten Erfassungseinheit erfasst werden, eine Funkkanal-Nutzungswahrscheinlichkeit zu berechnen; und
eine Bestimmungseinheit (111, 211), welche dafür konfiguriert ist, auf der Grundlage der Funkkanal-Nutzungswahrscheinlichkeiten, die von der Berechnungseinheit berechnet werden, einen Funkkanal der mehreren Funkkanäle zu bestimmen, wobei der eine Funkkanal der Kommunikationsanfangsstation zuzuordnen ist,
wobei die Berechnungseinheit die Funkkanal-Nutzungswahrscheinlichkeiten auf der Grundlage der Zukunftsvoraussageinformationen über die Kommunikationsanfangsstation und der letzten Voraussageinformationen über die Kommunikationsanfangsstation berichtigt.

2. Funkkommunikationssystem nach Anspruch 1, wobei die Berechnungseinheit die Funkkanal-Nutzungswahrscheinlichkeiten auf der Grundlage eines nicht genutzten Funkkanals berichtigt, welcher ein Funkkanal der mehreren Funkkanäle ist, der keinem der mehreren unteren Knoten zugeordnet ist.

3. Funkkommunikationssystem nach Anspruch 1, wobei die Berechnungseinheit die Funkkanal-Nutzungswahrscheinlichkeiten auf der Grundlage eines verlorenen Funkkanals berichtigt, welcher ein Funkkanal der mehreren Funkkanäle ist, der keinem der mehreren unteren Knoten zuzuordnen ist.

4. Funkkommunikationssystem nach Anspruch 1, wobei die dritte Erfassungseinheit die Kanalnutzungswahrscheinlichkeiten auf der Grundlage einer Zeitperiode erfasst, für welche die Funkkanäle bei der Funkkommunikation zugeordnet werden.

5. Funkkommunikationssystem nach Anspruch 1, wobei die dritte Erfassungseinheit die Kanalnutzungswahrscheinlichkeiten auf der Grundlage von Bandbreiten der Funkkanäle erfasst, die bei der Funkkommunikation zugeordnet werden.

6. Funkkommunikationssystem nach Anspruch 1, wobei die dritte Erfassungseinheit die Kanalnutzungswahrscheinlichkeiten auf der Grundlage von Funkentfernungen von Signalen erfasst, die über die Funkkanäle gesendet werden, die bei der Funkkommunikation zugeordnet werden.

7. Funkkommunikationssystem nach Anspruch 1, wobei:

jeder der mehreren unteren Knoten eine Voraussageeinheit umfasst, welche dafür konfiguriert ist, die Zukunftsvoraussageinformationen über die Station selbst zu geben; und
die erste Erfassungseinheit die Zukunftsvoraussageinformationen von jedem der mehreren unteren Knoten erfasst.

8. Funkkommunikationssystem nach Anspruch 1, welches ferner eine Überwachungseinheit umfasst, die dafür konfiguriert ist, die Funkkanäle zu überwachen, die von den mehreren unteren Knoten bei der Funkkommunikation tatsächlich genutzt werden,
wobei die erste Erfassungseinheit die Zukunftsvoraussageinformationen über jeden der mehreren unteren Knoten auf der Grundlage genutzter Mengen der Funkkanäle erfasst, die von der Überwachungseinheit überwacht werden.

9. Unterer Knoten (100), welcher über mindestens einen von mehreren Funkkanälen Funkkommunikation mit einem oberen Knoten (200) durchführt, umfassend:

eine erste Erfassungseinheit (104, 106), welche dafür konfiguriert ist, Zukunftsvoraussageinformationen über jede der eigenen Station und anderen unteren Knoten zu erfassen, wobei die Zukunftsvoraussageinformationen eine vor einem Start der Funkkommunikation vorausgesagte Datenverkehrsmenge anzeigen, die bei der Funkkommunikation zu senden ist;
eine zweite Erfassungseinheit (107), welche dafür konfiguriert ist, letzte Voraussageinformationen zu erfassen, welche eine vorausgesagte Datenverkehrsmenge anzeigen, die bei der Funkkommunikation zu senden ist, wenn die eigene Station die Funkkommunikation beginnt;
eine dritte Erfassungseinheit (102), welche dafür konfiguriert ist, Kanalnutzungsinformationen über jede der eigenen Station und der anderen unteren Knoten zu erfassen, wobei die Kanalnutzungsinformationen genutzte Mengen der Funkkanäle anzeigen, die bei der Funkkommunikation tatsächlich benutzt werden;
eine Berechnungseinheit (108), welche dafür konfiguriert ist, für jeden der mehreren Funkkanäle auf der Grundlage sowohl der Zukunftsvoraussageinformationen, die von der ersten Erfassungseinheit erfasst werden, als auch der Kanalnutzungsinformationen, die von der dritten Erfassungseinheit erfasst werden, eine Funkkanal-Nutzungswahrscheinlichkeit zu berechnen; und
eine Bestimmungseinheit (111), welche dafür konfiguriert ist, auf der Grundlage der Funkkanal-Nutzungswahrscheinlichkeiten, die von der Berechnungseinheit berechnet werden, einen Funkkanal der mehreren Funkkanäle zu bestimmen, wobei der eine Funkkanal der Kommunikationsanfangsstation zuzuordnen ist,
wobei die Berechnungseinheit die Funkkanal-Nutzungswahrscheinlichkeiten auf der Grundlage sowohl der Zukunftsvoraussageinformationen über die eigene Station als auch der letzten Voraussageinformationen über die eigene Station berichtigt.

10. Unterer Knoten nach Anspruch 9, welcher ferner eine Voraussageeinheit umfasst, die dafür konfiguriert ist, die Zukunftsvoraussageinformationen über seine eigene Station zu geben,
wobei die erste Erfassungseinheit die Zukunftsvoraussageinformationen über die eigene Station von der Voraussageeinheit erfasst und die Zukunftsvoraussageinformationen über die anderen unteren Knoten von den anderen unteren Knoten erfasst.

11. Unterer Knoten nach Anspruch 9, welcher ferner das Folgende umfasst:

eine Überwachungseinheit, welche dafür konfiguriert ist, die Funkkanäle zu überwachen, die von den anderen unteren Knoten bei der Funkkommunikation tatsächlich genutzt werden; und
eine Voraussageeinheit, welche dafür konfiguriert ist, die Zukunftsvoraussageinformationenüber ihre eigene Station zu geben,
wobei die erste Erfassungseinheit die Zukunftsvoraussageinformationen über die eigene Station von der Voraussageeinheit erfasst und die Zukunftsvoraussageinformationen über die anderen unteren Knoten auf der Grundlage genutzter Mengen der Funkkanäle erfasst, die von der Überwachungseinheit überwacht werden.

12. Oberer Knoten (200), welcher über mehrere Funkkanäle Funkkommunikation mit mehreren unteren Knoten (100) durchführt, umfassend:

eine erste Erfassungseinheit (206, 221), welche dafür konfiguriert ist, Zukunftsvoraussageinformationen über jeden der mehreren unteren Knoten zu erfassen, wobei die Zukunftsvoraussageinformationen eine vor einem Start der Funkkommunikation vorausgesagte Datenverkehrsmenge anzeigen, die bei der Funkkommunikation zu senden ist;

eine zweite Erfassungseinheit (207, 222), welche dafür konfiguriert ist, letzte Voraussageinformationen über eine Kommunikationsanfangsstation zu erfassen, welche ein unterer Knoten der mehreren unteren Knoten ist, der die Funkkommunikation beginnt, wobei die letzten Voraussageinformationen eine beim Start der Funkkommunikation vorausgesagte Datenverkehrsmenge anzeigen, die bei der Funkkommunikation zu senden ist;

eine dritte Erfassungseinheit (202), welche dafür konfiguriert ist, Kanalnutzungsinformationen über jeden der mehreren unteren Knoten zu erfassen, wobei die Kanalnutzungsinformationen genutzte Mengen der Funkkanäle anzeigen, die bei der Funkkommunikation tatsächlich benutzt werden;

eine Berechnungseinheit (208), welche dafür konfiguriert ist, für jeden der mehreren Funkkanäle auf der Grundlage sowohl der Zukunftsvoraussageinformationen, die von der ersten Erfassungseinheit erfasst werden, als auch der Kanalnutzungsinformationen, die von der dritten Erfassungseinheit erfasst werden, eine Funkkanal-Nutzungswahrscheinlichkeit zu berechnen; und

eine Bestimmungseinheit (211), welche dafür konfiguriert ist, auf der Grundlage der Funkkanal-Nutzungswahrscheinlichkeiten, die von der Berechnungseinheit berechnet werden, einen Funkkanal der mehreren Funkkanäle zu bestimmen, wobei der eine Funkkanal der Kommunikationsanfangsstation zuzuordnen ist,

wobei die Berechnungseinheit die Funkkanal-Nutzungswahrscheinlichkeiten auf der Grundlage sowohl der Zukunftsvoraussageinformationen über die Kommunikationsanfangsstation als auch der letzten Voraussageinformationen über die Kommunikationsanfangsstation berichtigt.

13. Oberer Knoten nach Anspruch 12, wobei die erste Erfassungseinheit die Zukunftsvoraussageinformationen von jedem der mehreren unteren Knoten erfasst.

14. Oberer Knoten nach Anspruch 12, welcher ferner eine Überwachungseinheit umfasst, die dafür konfiguriert ist, die Funkkanäle zu überwachen, die von den mehreren unteren Knoten bei der Funkkommunikation tatsächlich genutzt werden,

wobei die erste Erfassungseinheit die Zukunftsvoraussageinformationen über jeden der mehreren unteren Knoten auf der Grundlage genutzter Mengen der Funkkanäle erfasst, die von der Überwachungseinheit überwacht werden.

## Revendications

1. Système de radiocommunication qui inclut une pluralité de noeuds inférieurs (100) et un noeud supérieur (200) et qui effectue des radiocommunications entre la pluralité de noeuds inférieurs et le noeud supérieur par l'intermédiaire d'une pluralité de canaux radio, le système de radiocommunication comprenant :

une première unité d'acquisition (104, 106, 206, 221) configurée pour acquérir de futures informations de prédiction concernant chaque noeud de la pluralité de noeuds inférieurs, les futures informations de prédiction indiquant une quantité de trafic prévue, avant un début des radiocommunications, à transmettre dans les radiocommunications ;

une deuxième unité d'acquisition (107, 207, 22) configurée pour acquérir des dernières informations de prédiction concernant une station démarrant une communication qui est un noeud inférieur démarrant les radiocommunications parmi la pluralité de noeuds inférieurs, les dernières informations de prédiction indiquant une quantité de trafic prévue, au début des radiocommunications, à transmettre dans les radiocommunications ;

une troisième unité d'acquisition (102, 202) configurée pour acquérir des informations d'utilisation de canal concernant chaque noeud de la pluralité de noeuds inférieurs, les informations d'utilisation de canal indiquant des quantités utilisées de canaux radio réellement utilisés dans les radiocommunications ;

une unité de calcul (108, 208) configurée pour calculer une probabilité d'utilisation de canal radio pour chaque canal de la pluralité de canaux radio sur la base tant des futures informations de prédiction acquises par la première unité d'acquisition que sur les informations d'utilisation de canal acquises par la troisième unité d'acquisition ; et

une unité de détermination (111, 211) configurée pour déterminer un canal radio particulier parmi la pluralité de canaux radio sur la base des probabilités d'utilisation de canal radio calculées par l'unité de calcul, le canal radio particulier devant être attribué à la station démarrant la communication,

dans lequel l'unité de calcul corrige les probabilités d'utilisation de canal radio sur la base des futures informations de prédiction concernant la station démarrant la communication et des dernières informations de prédiction concernant la station démarrant la communication.

2. Système de radiocommunication selon la revendication 1, dans lequel l'unité de calcul corrige les probabilités d'utilisation de canal radio sur la base d'un canal radio inutilisé qui est un canal radio non attribué à un quelconque noeud de la pluralité de noeuds inférieurs, parmi la pluralité de canaux radio.

3. Système de radiocommunication selon la revendication 1, dans lequel l'unité de calcul corrige les probabilités d'utilisation de canal radio sur la base d'un canal radio perdu qui est un canal radio qui ne peut pas être attribué à un quelconque noeud de la pluralité de noeuds inférieurs, parmi la pluralité de canaux radio.

4. Système de radiocommunication selon la revendication 1, dans lequel la troisième unité d'acquisition acquiert les informations d'utilisation de canal sur la base d'une période de temps pendant laquelle les canaux radio sont attribués dans les radiocommunications.

5. Système de radiocommunication selon la revendication 1, dans lequel la troisième unité d'acquisition acquiert les informations d'utilisation de canal sur la base de bandes passantes des canaux radio attribués dans les radiocommunications.

6. Système de radiocommunication selon la revendication 1, dans lequel la troisième unité d'acquisition acquiert les informations d'utilisation de canal sur la base de distances radio de signaux transmis par l'intermédiaire des canaux radio attribués dans les radiocommunications.

7. Système de radiocommunication selon la revendication 1, dans lequel :

   chaque noeud de la pluralité de noeuds inférieurs inclut une unité de prédiction configurée pour prévoir les futures informations de prédiction concernant la station elle-même ; et
   la première unité d'acquisition acquiert les futures informations de prédiction à partir de chaque noeud de la pluralité de noeuds inférieurs.

8. Système de radiocommunication selon la revendication 1, comprenant en outre une unité de contrôle configurée pour contrôler les canaux radio réellement utilisés par la pluralité de noeuds inférieurs dans les radiocommunications, dans lequel la première unité d'acquisition acquiert les futures informations de prédiction concernant chaque noeud de la pluralité de noeuds inférieurs, sur la base de quantités utilisées des canaux radio contrôlés par l'unité de contrôle.

9. Noeud inférieur (100) qui effectue des radiocommunications avec un noeud supérieur (200) par l'intermédiaire d'au moins un quelconque canal d'une pluralité de canaux radio, comprenant :

   une première unité d'acquisition (104, 106) configurée pour acquérir de futures informations de prédiction concernant chacun de sa propre station et d'autres noeuds inférieurs, les futures informations de prédiction indiquant une quantité de trafic prévue, avant un début des radiocommunications, à transmettre dans les radiocommunications ;
   une deuxième unité d'acquisition (107) configurée pour acquérir des dernières informations de prédiction (407) indiquant une quantité de trafic prévue, quand la propre station démarre les radiocommunications, à transmettre dans les radiocommunications ;
   une troisième unité d'acquisition (102) configurée pour acquérir des informations d'utilisation de canal, concernant chacun de la propre station et des autres noeuds inférieurs, les informations d'utilisation de canal indiquant des quantités utilisées des canaux radio réellement utilisés dans les radiocommunications ;
   une unité de calcul (108) configurée pour calculer une probabilité d'utilisation de canal radio pour chaque canal de la pluralité de canaux radio sur la base tant des futures informations de prédiction acquises par la première unité d'acquisition que des informations d'utilisation de canal acquises par la troisième unité d'acquisition ; et
   une unité de détermination (111) configurée pour déterminer un canal radio particulier parmi la pluralité de canaux radio sur la base des probabilités d'utilisation de canal radio calculées par l'unité de calcul, le canal radio particulier devant être attribué à la station démarrant la communication,
   dans lequel l'unité de calcul corrige les probabilités d'utilisation de canal radio sur la base tant des futures informations de prédiction concernant la propre station que des dernières informations de prédiction concernant la propre station.

10. Noeud inférieur selon la revendication 9, comprenant en outre une unité de prédiction configurée pour prévoir les futures informations de prédiction concernant sa propre station, dans lequel la première unité d'acquisition acquiert les futures informations de prédiction concernant la propre station à partir de l'unité de prédiction, et acquiert les futures informations de prédiction concernant les autres noeuds inférieurs à partir des autres noeuds inférieurs.

**11.** Noeud inférieur selon la revendication 9, comprenant en outre :

une unité de contrôle configurée pour contrôler les canaux radio réellement utilisés par les autres noeuds inférieurs dans les radiocommunications ; et
une unité de prédiction configurée pour prévoir les futures informations de prédiction concernant sa propre station,
dans lequel la première unité d'acquisition acquiert les futures informations de prédiction concernant la propre station à partir de l'unité de prédiction, et acquiert les futures informations de prédiction concernant les autres noeuds inférieurs sur la base des quantités utilisées des canaux radio contrôlés par l'unité de contrôle.

**12.** Noeud supérieur (200) qui effectue des radiocommunications avec une pluralité de noeuds inférieurs (100) par l'intermédiaire d'une pluralité de canaux radio, comprenant :

une première unité d'acquisition (206, 221) configurée pour acquérir de futures informations de prédiction concernant chaque noeud de la pluralité de noeuds inférieurs, les futures informations de prédiction indiquant une quantité de trafic prévue, avant un début des radiocommunications, à transmettre dans les radiocommunications ;
une deuxième unité d'acquisition (207, 222) configurée pour acquérir des dernières informations de prédiction concernant une station démarrant une communication qui est un noeud inférieur démarrant les radiocommunications parmi la pluralité de noeuds inférieurs, les dernières informations de prédiction indiquant une quantité de trafic prévue, au début des radiocommunications, à transmettre dans les radiocommunications ;
une troisième unité d'acquisition (202) configurée pour acquérir des informations d'utilisation de canal concernant chaque noeud de la pluralité de noeuds inférieurs, les informations d'utilisation de canal indiquant des quantités utilisées des canaux radio réellement utilisés dans les radiocommunications ;
une unité de calcul (208) configurée pour calculer une probabilité d'utilisation de canal radio pour chaque canal de la pluralité de canaux radio sur la base tant des futures informations de prédiction acquises par la première unité d'acquisition que des informations d'utilisation de canal acquises par la troisième unité d'acquisition ; et
une unité de détermination (211) configurée pour déterminer un canal radio particulier parmi la pluralité de canaux radio sur la base des probabilités d'utilisation de canal radio calculées par l'unité de calcul, le canal radio particulier devant être attribué à la station démarrant la communication,
dans lequel l'unité de calcul corrige les probabilités d'utilisation de canal radio sur la base tant des futures informations de prédiction concernant la station démarrant la communication que des dernières informations de prédiction concernant la station démarrant la communication.

**13.** Noeud supérieur selon la revendication 12, dans lequel la première unité d'acquisition acquiert les futures informations de prédiction à partir de chaque noeud de la pluralité de noeuds inférieurs.

**14.** Noeud supérieur selon la revendication 12, comprenant en outre une unité de contrôle configurée pour contrôler les canaux radio réellement utilisés par la pluralité de noeuds inférieurs dans les radiocommunications,
dans lequel la première unité d'acquisition acquiert les futures informations de prédiction concernant chaque noeud de la pluralité de noeuds inférieurs sur la base de quantités utilisées des canaux radio contrôlés par l'unité de contrôle.

## FIG. 1

TOP UPPER NODE ～ 300

UPPER NODE ～ 200

～100

～100

～100

～100

FIG. 2

# FIG. 3

EP 2 224 756 B1

# FIG. 4

# FIG. 5

FIG. 6

STANDBY PROCESSING

TRANSMISSION PROCESSING

100    100    ...    100    S11    200    S10    300

REGISTRATION OF VISITING LOWER NODE — S12

S13

MONITORING OF RADIO CHANNEL — S14

FUTURE PREDICTION PROCESSING — S15

S16    S17

CALCULATION PROCESSING OF CHANNEL USE RATE (1) — S18

LATEST PREDICTION PROCESSING — S19

CALCULATION PROCESSING OF CHANNEL USE RATE (2) — S20

CHANNEL ACQUISITION PROCESSING — S21

S22    S23    S24

EP 2 224 756 B1

FIG. 7

200 — UPPER NODE

205 STORAGE

202 MEASUREMENT UNIT

201 RECEPTION UNIT

203 STATION ID DETECTION UNIT

208 CALCULATION UNIT

209 FIRST CALCULATION UNIT

206 FUTURE PREDICTION INFORMATION ACQUISITION UNIT

210 SECOND CALCULATION UNIT

207 LATEST PREDICTION INFORMATION ACQUISITION UNIT

211 ASSIGNMENT UNIT

212 TRANSMISSION UNIT

EP 2 224 756 B1

FIG. 8

STANDBY PROCESSING

TRANSMISSION PROCESSING

S111

S110

S112 — REGISTRATION OF VISITING LOWER NODE

S113

S114 — MONITORING OF RADIO CHANNEL

S115 — FUTURE PREDICTION PROCESSING

S116

S117 — CALCULATION PROCESSING OF CHANNEL USE RATE (1)

S118

S119 — LATEST PREDICTION PROCESSING

S120

S121 — CALCULATION PROCESSING OF CHANNEL USE RATE (2)

S122 — CHANNEL ASSIGNMENT PROCESSING

S123

S124

100  100  ...  100  200  300

EP 2 224 756 B1

FIG. 9

LOWER NODE

100

101 RECEPTION UNIT

102 MEASUREMENT UNIT

105 STORAGE

103 STATION ID DETECTION UNIT

108 CALCULATION UNIT

106 FUTURE PREDICTION UNIT

109 FIRST CALCULATION UNIT

107 LATEST PREDICTION UNIT

110 SECOND CALCULATION UNIT

111 DETERMINATION UNIT

113 TRANSMISSION UNIT

112 TRANSMISSION SIGNAL GENERATION UNIT

EP 2 224 756 B1

29

**FIG. 10**

200 — UPPER NODE

201 — RECEPTION UNIT

202 — MEASUREMENT UNIT

203 — STATION ID DETECTION UNIT

205 — STORAGE

208 — CALCULATION UNIT
209 — FIRST CALCULATION UNIT
210 — SECOND CALCULATION UNIT

221 — FUTURE PREDICTION UNIT

222 — LATEST PREDICTION UNIT

211 — ASSIGNMENT UNIT

212 — TRANSMISSION UNIT

# FIG. 11

| NUMBER OF UPPER NODES | | 1 |
|---|---|---|
| NUMBER OF LOWER NODES | | 8 |
| NUMBER OF RADIO CHANNELS | | 100 |
| TRAFFIC MODEL | LONG TERM | UNIFORM DISTRIBUTION (EACH STATION HAS EQUAL AVERAGE TRAFFIC AMOUNT) |
| | SHORT TERM | POISSON DISTRIBUTION |
| LONG TERM TRAFFIC PREDICTION ERROR | | DOUBLED TRUE VALUE (FOUR STATIONS), HALF OF TRUE VALUE (OTHER FOUR STATIONS) |
| COEFFICIENT $(\alpha, \beta, \gamma)$ | | (1.0, 0.2, 0.9) |

# FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. XING ; R. CHADRAMOULI ; S. MANGOLD ; S. SHANKAR.** Dynamic Spectrum Radio Networks. *IEEE, Journal on Selected Areas in Communications (JSAC,* March 2006, vol. 24 (3), 626-637

- **ZHAO J et al.** Distributed Coordination in Dynamic Spectrum Allocation Networks. *1st IEEE International Symposium on New Frontiers in Dynamic Spectrum Access Networks,* November 2005, 259-268
- **H. GINTIS.** Game Theory Evolving: A Problem-centered Introduction to Modeling Stratetig Behavior. Princeton University Press, 2000